# EUROPEAN PATENT APPLICATION

(11) **EP 4 317 049 A1**
(43) Date of publication of application: **07.02.2024**
(21) Application number: 23186298.8
(22) Date of filing: 19.07.2023
(51) Int. Cl.: B66F 9/06, B66F 9/075, G05D 1/02

(54) **INDUSTRIAL TRUCK AUTONOMOUS OR ASSISTED DRIVING USING MARKER DETECTION**

(30) Priority: 01.08.2022 IT 202200016308
(71) Applicant: Toyota Material Handling Manufacturing Italy S.p.A, 40132 Bologna (IT)
(72) Inventor: CAMPISI, Andrea, 40132 Bologna (IT); NAPOLITANO, Giovanni, 40132 Bologna (IT); MASTROIANNI, Francesco, 40132 Bologna (IT)
(74) Representative: Hoffmann Eitle

(57) **Abstract**

An industrial truck is configured to carry a load and having an autonomous/assisted driving function for approaching an apparatus configured to interact with the industrial truck for performing loading/unloading operations of the truck. The industrial truck comprises a control unit configured for controlling the autonomous/assisted driving function; at least a camera configured to capture images of an environment of the industrial truck, the at least one camera being connected to the control unit for providing the control unit with an image signal related to the captured images. The control unit is configured to detect, based on the image signal, an optical marker in the environment, wherein the control unit is configured to determine a relative position of the industrial truck with respect to the detected marker based on the image signal. The control unit is further configured to acquire information related to the optical marker, the information defining a target position to be reached by the industrial truck relative to the optical marker for performing the loading/unloading operations, wherein the control unit is further configured to control the autonomous/assisted driving function based on the determined relative position of the industrial truck with respect to the detected optical marker and on the information related to the optical marker, in order to reach the target position.

## Description

### Technical field

Example aspects herein relate to autonomous or assisted driving of an industrial truck, and in particular to a system for autonomous or assisted driving of an industrial truck, an industrial truck, a method, a computer program, and a controller.

### Background

Industrial trucks, such as forklift trucks, towing trucks, dollies, carts, rack carriers, hand-lift trucks, etc., handle and carry material in an industrial environment, such as a warehouse. Industrial trucks may have an autonomous-driving function allowing the truck to navigate in the industrial environment without being operated by a human, and/or an assisted-driving function providing indications to a human operator of the truck to correct the operation of the truck, or, adjusting automatically the operation of the truck.

In order to perform an autonomous-driving or assisted-driving function, information regarding the position of the truck in the industrial environment must be accurate in order to ensure the industrial truck interacts with other elements in the industrial environment in an appropriate way, and risks of collision are reduced. Known systems for obtaining information relating to the position include LIDAR (Light Detection and Ranging) sensors, satellite navigation receivers such as GNSS (Global Navigational Satellite System) receivers, or IMUs (Inertial Measurement Unit). Based on the collected information relating to the position, the system generates a control signal for performing the autonomous/assisted-driving function, for example by causing a visual and/or audio indication to be provided to the operator (e.g. via a display, lights and/or loudspeakers), or by controlling a movement of the truck automatically.

When performing loading or unloading operation, the position of the industrial truck must be extremely precise, in order to ensure a correct positioning of the industrial truck with respect to a loading/unloading apparatus included in the warehouse, the industrial site or the like. For example, the loading/unloading apparatus could be a crane, an overhead travelling crane, a mobile wheeled crane, a shelving unit, a mobile shelf or the like. The usual navigation systems based e.g. on GNSS cannot ensure a sufficiently accurate positioning of the industrial truck with respect to the loading/unloading apparatus that is required during the loading/unloading operations. Furthermore, since the loading/unloading apparatus can be movable, it is difficult for the known navigations systems to determine under any circumstance the correct target position relative to the loading/unloading apparatus for performing loading/unloading operations in cooperation with the loading/unloading apparatus.

### Summary

There is therefore a need to improve the autonomous/assisted driving function of an industrial truck so that an accurate and correct position of the industrial truck with respect to a loading/unloading apparatus can be reliably reached under different circumstances.

In view of the above object, according to a first example aspect herein, there is provided an industrial truck configured to carry a load and having an autonomous/assisted driving function for approaching an apparatus configured to interact with the industrial truck for performing loading/unloading operations of the truck, the industrial truck comprising:
- a control unit configured for controlling the autonomous/assisted driving function;
- at least a camera configured to capture images of an environment of the industrial truck, the at least one camera being connected to the control unit for providing the control unit with an image signal related to the captured images;
characterized in that the control unit is configured to detect, based on the image signal, an optical marker in the environment, wherein the control unit is configured to determine a relative position of the industrial truck with respect to the detected marker based on the image signal,
wherein the control unit is further configured to acquire information related to the optical marker, the information defining a target position to be reached by the industrial truck relative to the optical marker for performing the loading/unloading operations, wherein the control unit is further configured to control the autonomous/assisted driving function based on the determined relative position of the industrial truck with respect to the detected optical marker and on the information related to the optical marker, in order to reach the target position.

As the industrial truck can detect its relative position with regard to the optical marker by means of the camera and can acquire the information relating to the marker defining a target position to be reached by the industrial truck relative to the optical marker, it is possible for the industrial truck to precisely determine and reach a target position based on the marker detection for performing the load/unloading operations. Specifically, the marker can be applied (or associated) to a portion of the apparatus configured to interact with the industrial truck for loading/unloading the truck (hereinafter also "loading/unloading apparatus"). The target position is a position in which the loading/unloading apparatus and the industrial truck can interact to perform a loading/unloading operation, i.e. an operation of loading or unloading the industrial truck. The information relating to the marker defining a target position to be reached by the industrial truck relative to the optical marker is set in accordance to the configuration of the loading/unloading apparatus to which the optical marker is applied (or associated). The information relating to the marker can be set by taking into account also other circumstances relating to the operation of the industrial truck and/or of the environment in which the loading/unloading apparatus is located. Hence, the industrial truck can be flexibly operated upon detecting the marker depending on the information relating to the marker defining a target position to be reached by the industrial truck relative to the optical marker; the information relating to the marker can set depending on the way the marker is applied on the loading/unloading apparatus; the marker can be in fact applied in different positions on the loading/unloading apparatus depending on the application and the circumstances; thanks to the marker detection and the information relating to the marker defining a target position to be reached by the industrial truck relative to the optical marker, the industrial truck can reliably reach a precise position for interacting with the loading/unloading apparatus under several different circumstances, i.e. in view of different arrangements/associations of the marker with the loading/unloading apparatus, in case loading/unloading apparatuses of different shapes/configurations are used in the industrial site or warehouse, or in case of specific circumstances occurring in the industrial site/warehouse in which the industrial truck is operating.

According to an aspect, the information related to the optical marker is encoded in the optical marker, wherein the control unit is configured to extract the information from the image signal representing the optical marker as provided by the camera. Hence, a specific optical marker can be used for a specific type of loading/unloading apparatus and/or for a specific positioning of the marker on the loading/unloading apparatus. Upon detecting the optical marker, the industrial truck can thus reliably obtain the information associated to the detected optical marker.

According to an aspect, the industrial truck includes a receiving section configured to receive from a remote processing device (or management system) an instruction for performing a loading/unloading operation, wherein the instruction includes the information relating to the optical marker. Hence, the information associated to the optical marker can be configured at the industrial truck by an external management system depending on how the optical marker is applied to loading/unloading apparatus and/or any other circumstance of the industrial site in which the industrial truck operates. Accordingly, a high degree of flexibility in the operation of the industrial truck can be achieved in an efficient manner by providing an appropriate instruction from the management system to the industrial truck. The management system may store a plurality of information relating to the optical marker each associated with one of a plurality of identifiers of optical markers. The content of the information associated to the plurality of optical markers can be configured at the management system depending on the way of operating and the configuration of the loading/unloading apparatuses in the warehouse. Each of the plurality of optical markers can be associated to each of a plurality of loading/unloading apparatuses in the warehouse. The management system may be a management system of the warehouse or the like.

According to an aspect, the instruction from the management system includes an indication of a search space in which the industrial truck is instructed to search for the optical marker corresponding to the information included in the instruction. The processing power required for detecting the optical marker is thus reduced, since the control unit does not need to scan the image signals fed by the camera in areas outside the search area.

According to an aspect, the information relating to the optical marker is one of:
- an indication that the target position to be reached by the industrial truck is located in an area below the optical marker, or
- an indication that the target position to be reached by the industrial truck is a position in a preestablished area, and at a distance from the optical marker in a horizontal direction. Hence, loading/unloading operations can be efficiently performed in case of different configurations of, e.g., a wheeled mobile crane.

According to an aspect, the control unit is configured to perform, based on the image signal provided by the camera, an object recognition function to recognize at least a part of the apparatus configured to interact with the industrial truck for loading and unloading the truck, wherein the control unit is configured to preferentially attempt to detect the optical marker in a portion of the image captured by the camera that is determined based on the recognition of the at least the part of apparatus by means of the object recognition function. Hence, the processing power for detecting the optical marker can be reduced, since only a portion of the image can be processed to detect the marker.

According to an aspect, the control unit is configured to, upon detecting the at least the part of the apparatus by means of the object recognition function, determine that a portion of the apparatus where the optical marker is placed is outside a capture range of the camera, determine a change of the capture range required to cause the portion of the apparatus to be within the field of view of the camera, and control at least one of the camera and the autonomous/assisted driving function based on the determined change of the capture range in order to cause the camera to capture an image of the portion of the apparatus. Hence, the capture range of the camera can be properly varied to detect the marker so that the processing power required for detecting the optical marker is reduced and the marker detection is improved.

According to an aspect, the optical marker is a QR code, a bar code, an ArUco or an AprilTag. Accordingly, the marker can be easily detected as well as the relative position of the marker with respect to the camera and, hence, of the industrial truck; furthermore, additional information can be encoded in the marker and be acquired by the industrial truck.

According to an aspect, it is provided a system including the industrial truck as above described and an apparatus configured to interact with the industrial truck for loading and unloading the truck, wherein the apparatus includes a fixed part that is fixed during the loading/unloading of the industrial truck and a movable part that is movably connected to the fixed part, the movable part being configured for loading or unloading the industrial truck, wherein the optical marker is located either on the fixed part or on the movable part of the apparatus.

According to an aspect, a method is provided for performing an autonomous/assisted driving function of an industrial truck for approaching an apparatus configured to interact with the industrial truck for performing loading/unloading operations of the industrial truck, comprising:
- capturing, by means of at least a camera of the industrial truck, images of an environment of the industrial truck,
- generating an image signal related to the captured images;
- detecting, based on the image signal, an optical marker in the environment,
- determining a relative position of the industrial truck with respect to the detected optical marker based on the image signal,
- acquiring information related to the optical marker, the information defining a target position to be reached by the industrial truck relative to the optical marker for performing the loading/unloading operations,
- controlling the autonomous/assisted driving function based on the determined relative position of the industrial truck with respect to the detected optical marker and on the information related to the optical marker, in order to reach the target position.

### Brief description of the drawings

The above and other advantages of the present invention will be illustrated with reference to example embodiments of the invention, described with reference to the appended drawings listed as follows.
Fig. 1 shows a view of an industrial truck according to the invention in a position ready to interact with a loading/unloading apparatus;
Fig. 2 shows examples of industrial trucks according to the invention;
Fig. 3 shows a schematic view of components of the industrial truck;
Fig. 4 shows an arrangement of the optical marker on the loading/unloading apparatus;
Fig. 5 shows a different arrangement of the optical marker on the loading/unloading apparatus;
Fig. 6 shows an industrial truck driving in the direction of loading/unloading apparatus;
Fig. 7 shows the steps of the operations performed by the industrial truck according to an embodiment;
Fig. 8 shows the steps of the operations performed by the industrial truck according to a different embodiment;
Fig. 9 shows the steps of a method performed by the industrial truck according to the present disclosure;
Fig. 10 shows a schematic view of a possible implementation of the control unit of the industrial truck.

### Detailed description

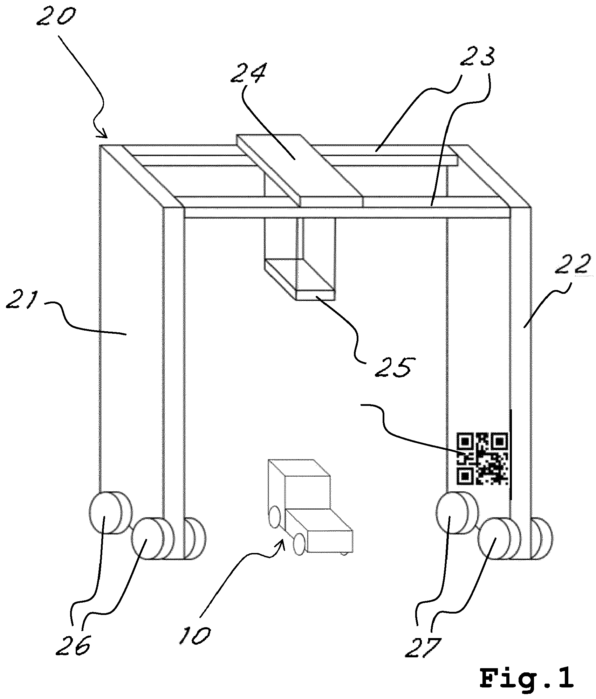

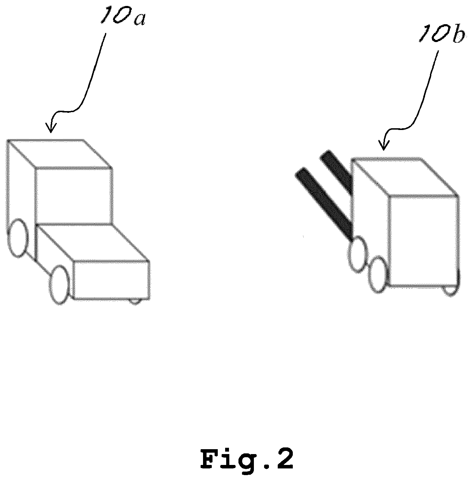

Fig. 1 shows an industrial truck 10 and an apparatus 20 (hereinafter also loading/unloading apparatus) configured to interact with the industrial truck for loading/unloading operations of the industrial truck. The industrial truck 10 can be of any known type to operate in an industrial site, a warehouse, or the like for manipulating, transferring or handling a load. For example, the industrial truck 10 can be a towing tractor (or towing truck) 10a or a forklift truck 10b, as depicted in figure 2. The industrial truck 10 can be defined as a material handling truck. These vehicles are used to move containers, pallets and the like within the warehouse, airport, harbours, or the like.

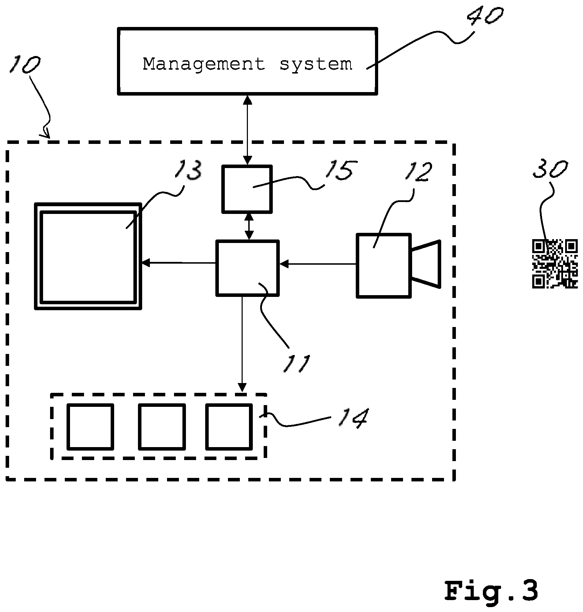

The industrial truck 10 has an autonomous/assisted driving function for approaching the apparatus 20 configured to interact with the industrial truck for loading/unloading operations of the industrial truck. The autonomous/assisted driving function can be controlled by a control unit 11 of the industrial truck (shown in figure 3). The autonomous/assisted driving function can be performed based on different inputs from sensors of the industrial trucks, such as cameras, GPS receivers, LIDAR and the like. The autonomous/assisted driving function can include a navigation function of the industrial truck 10 in the environment in which the industrial truck is active. The autonomous/assisted driving function includes in the present disclosure also a function of approaching the loading/unloading apparatus for precisely reaching a target position for performing loading/unloading operations.

Preferably, controlling the autonomous/assisted driving function comprises controlling a movement of the industrial truck, and/or causing notification of information assisting the control of the industrial truck to be provided to an operator. Specifically, in case of assisted driving function, information is notified to the user of the industrial truck to assist a driving operation; the notification of information occurs by means of a user interface; preferably the user interface includes a display 13 as shown in figure 3. The display 13 may display information assisting the user to perform a driving operation for approaching a target position for loading/unloading in cooperation with the apparatus 20. In case of autonomous driving function, the control unit 11 controls directly the movement of the industrial truck, e.g. by sending control signals to a plurality of devices 14 (schematically shown in figure 3), such as a steering device, a motor, a braking device of the industrial truck and the like.

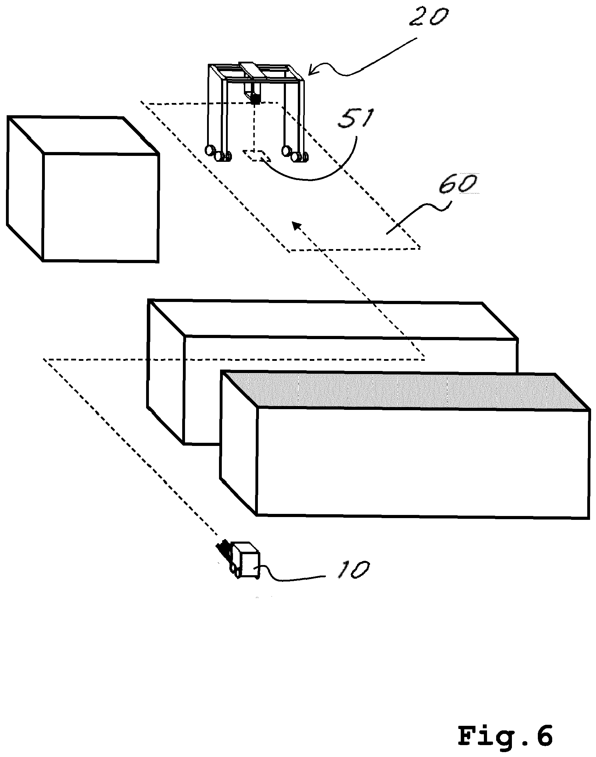

The industrial truck 10 can cooperate with a loading/unloading apparatus 20 for performing the loading/unloading operations. The loading/unloading apparatus 20 can be, e.g. a crane, an overhead travelling crane, a mobile wheeled crane, a shelving unit, a mobile shelf or the like. In the example shown in figure 1, the loading/unloading apparatus 20 is a mobile wheeled crane. The loading/unloading apparatus 20 of the depicted example includes a moving trolley 24 (that allows the horizontal movement of the loading/unloading platform) and a winch (not shown) mounted on the trolley 24 that allows vertical movements of the spreader 25 supported by the trolley 24. The spreader 25 is the actual "clamp" used to grasp containers or more in general a load to be loaded/unloaded on/from the industrial truck 10. The trolley 24 is mounted on a crossbeam structure 23 so as to be movable along the crossbeam structure 23. The spreader 25 can be moved vertically with respect to the trolley 24. The crossbeam structure 23 is supported by two vertical pillars 21, 22 of the apparatus 20 on opposite sides of the crossbeam structure 23. Each pillar 21, 22 has wheels 26, 27 to allow a movement of the loading/unloading apparatus 20 in a direction perpendicular to the crossbeam structure 23. However, also other types of loading/unloading apparatus could be used in combination with the industrial truck 10. E.g. the loading/unloading apparatus 20 could be implemented as movable shelf platform of a warehouse. More in general, the loading/unloading apparatus 20 may include a movable part that is moved during loading/unloading of the truck and a fixed part that is fixed during loading/unloading of the truck. Furthermore, the whole loading/unloading apparatus 20 can be movable in a restricted area; in the example of fig. 1, the pillars 21, 22 and the crossbeam structure 23 can be moved e.g. along a lane (the restricted area, see reference 60 in fig. 6) in the warehouse, thanks to the wheels 26, 27 and suitable drive system (not shown).

The industrial truck 10 includes at least a camera 12 (schematically shown in figure 3) configured to capture images of an environment of the industrial truck. The at least one camera is connected to the control unit 11 for providing the control unit with an image signal generated by the camera and related to the captured images (see figure 3). Preferably, the industrial truck 10 includes a plurality of cameras (RGB, NIR e/o IR), mounted on the front part of the vehicle and/or on the lateral sides thereof.

The industrial truck 10 includes a receiving section 15 configured to receive from a remote processing device (or server) 40 an instruction for performing a loading/unloading operation. The instruction may include an indication of a loading/unloading apparatus in the warehouse at which the industrial truck must load or unload a carried load. The warehouse includes a plurality of loading/unloading apparatuses, possibly with different configurations, arrangements and geometries. The receiving section 15 can be implemented as a transceiver for transmitting and receiving information to/from a remote server 40. The remote server can be a managing system of the industrial site/warehouse in which the industrial truck 10 operates. The transceiver 15 can be e.g. a wireless transceiver of any known type, e.g. a wifi or the like.

The control unit 11 is configured to detect, based on the image signal received from the camera 12, an optical marker 30 in the environment. The optical marker 30 is positioned or applied on the loading/unloading apparatus 20. More generally, the optical marker 30 can be spatially associated to the loading/unloading apparatus 20, i.e. it has a predetermined spatial relationship to loading/unloading apparatus 20 or, more specifically, to a portion of the loading/unloading apparatus 20 configured to engage with the load carried by the industrial truck. In the example in figure 1, the optical marker 30 is placed on the pillar 22 of the loading/unloading apparatus 20; however, as it will be apparent from the following description, the optical marker 30 may be placed on another portion of the loading/unloading apparatus 20. The optical marker 30 can be a fiducial marker; e.g. the optical marker can be a QR code, ArUco, AprilTag, WyCon marker, WyCode marker. The optical marker 30 may include a number of visual features. The features may include information associated to the optical marker, e.g. a relative position of a target position with respect to the optical marker. Furthermore, the optical marker is configured so as to enable an image processing to determine the position of the optical marker relative to the camera that captured it.

The control unit 11 is configured to determine a relative position of the industrial truck 10 with respect to the detected marker 30 based on the image signal. In this determination, the control unit 11 uses an information relating to the position at which the camera 12 is mounted on the industrial truck. The relative position of the industrial truck may refer to any predetermined point of reference on the industrial truck, e.g. a point corresponding to a central position of the material handling device of the industrial truck. The relative position of the industrial truck 10 with respect to the optical marker 30 can be determined by a software module of the control unit 11. The software module can include a per se known image processing algorithm to determine the relative position of the marker and/or to extract any additional information encoded in the optical marker, such as an identification and/or an information relating to the use of the optical marker. The software may make use of known image processing algorithms and/or advanced machine/deep learning techniques to this end. The software may make use of the calculation acceleration provided by GPUs, TPUs and/or VPUs. For example, the size of the detected optical marker (e.g. in number of pixels or ratio of the pixels corresponding to the optical marker to the total number of pixels of the image) can be used to estimate a distance between the detected optical marker 30 and the camera 12. Additionally, the arrangement of visual features can be used to determine an orientation of the detected optical marker (for example, a direction normal to the surface on which the optical marker is placed), relative to the camera capturing the optical marker.

The control unit 11 is further configured to acquire information related to the optical marker 30 that defines a target position to be reached by the industrial truck 10 relative to the optical marker 30 for performing the loading/unloading operations.

According to an embodiment, the information related to the optical marker is encoded in the optical marker 30; in this case, the control unit 11 is configured to extract the information from the image signal representing the optical marker as provided by the camera.

Alternatively, the industrial truck 10 is configured to acquire the information related to the optical marker 30 that defines a target position to be reached by the industrial truck relative to the optical marker from an instruction received from the management system 40 for performing a loading/unloading operation via the transceiver 15; in this case, the information related to the optical marker may be embedded in the instruction for performing a loading/unloading operation received from the management system 40.

The information related to the optical marker that defines a target position to be reached by the industrial truck relative to the optical marker may be expressed e.g. as a vector indicating a direction with respect to the optical marker (e.g. with respect to a plane in which the marker is positioned) and a distance therefrom. The target position may be intended as a range of target positions, in order to consider that the loading/unloading apparatus 20 might have a movable part capable of reaching different positions of the industrial truck for the loading/unloading operations.

For example, the information related to the optical marker that defines a target position to be reached by the industrial truck relative to the optical marker is one of:
a) an indication that the target position to be reached by the industrial truck is a position in a preestablished area, and at a distance from the optical marker in a horizontal direction, or
b) an indication that the target position to be reached by the industrial truck is located in an area below the optical marker.

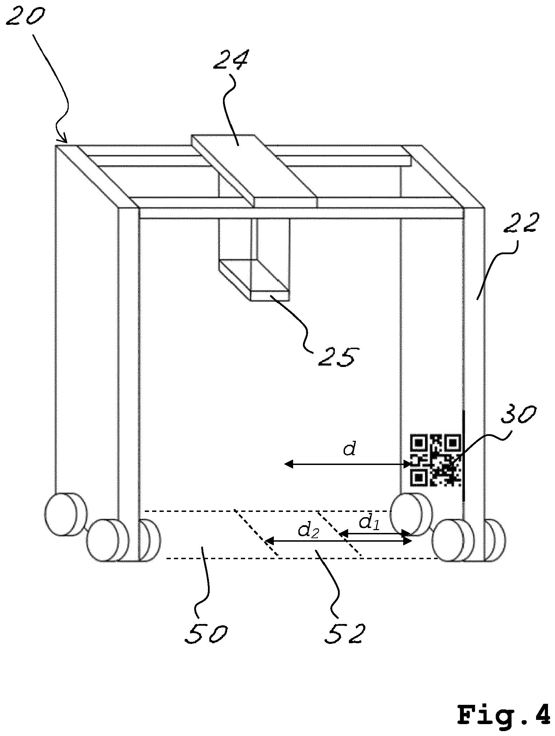

Case a) is represented by the example of figure 4. In this case the optical marker 30 is placed on a fixed part of the apparatus 20 that is fixed during the loading/unloading operation of the industrial truck 10, e.g. a pillar of the wheeled mobile crane 20. In this case, the target position is determined by a distance d, or a range of distances d₁-d₂, from the marker along an area (or line) 50 under the crossbeam structure 23. The target position is indicated with reference 52. The distance d or the range d₁-d₂ can be configured in different manner e.g. at the management system 40 based on the circumstance; for example, in case a lane under the crane 20 is not accessible, a specific positioning of the industrial truck 10 must be reached, and no range can be included in the information relating to the optical marker; different ranges can be set depending the different operating condition of the warehouse;

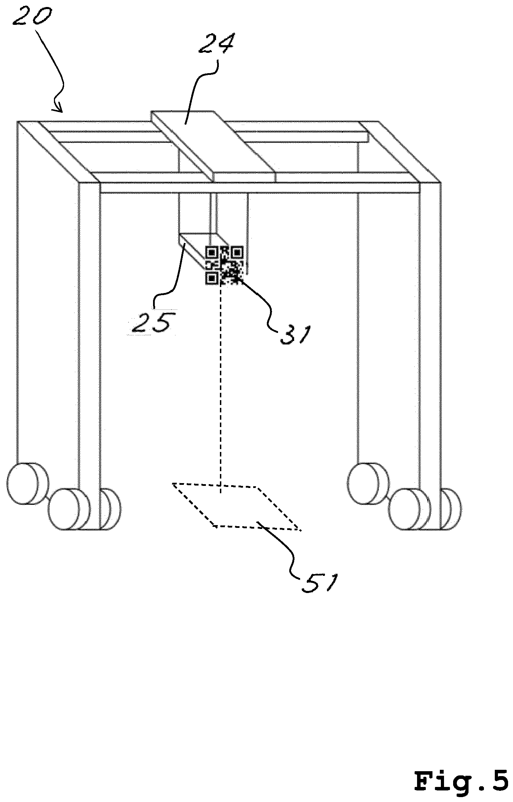

Case b) is represented by the example of figure 5. The target position is indicated with reference 51. In this case the optical marker 31 is placed on the movable part of the apparatus 20, in the example of the embodiment on the spreader 25. This arrangement is useful in case the lateral movement of the spreader 25 is expected to be limited, e.g. due to the presence of other vehicles or temporary restrictions in the usage of the lanes under the crane 20, but unknown a priori; hence, the horizontal position of the spreader 25 and of the target position with respect to the fixed part of the crane 20 cannot be configured in advance, e.g. in the management system 40.

The control unit 11 is configured to control the autonomous/assisted driving function based on the detected optical marker and on the information in order to reach the target position. Specifically, after detecting the optical marker 30, 31, the control unit 11 determines the relative position of the industrial truck 10 with respect to the marker 30, 31 based on the image signal received from the camera 12. Knowing the target position with respect to the optical marker based on the acquired information associated to the optical marker and the current position of the industrial truck with respect to the optical marker, the control unit 11 is in the condition to determine the movement of the industrial truck necessary to reach the target position in a precise manner for performing the loading/unloading operation in cooperation with the loading/unloading apparatus 20.

In an aspect, the control unit 11 is configured to perform, based on the image signal provided by the camera 12, an object recognition function to recognize at least a part of the apparatus 20 configured to interact with the industrial truck for loading and unloading the truck. The control unit 11 is configured to preferentially attempt to detect the optical marker in a portion of the image captured by the camera that is determined based on the recognition of the at least the part of apparatus by means of the object recognition function.

In an further aspect, the control unit 11 is configured to, upon detecting the at least the part of the apparatus 20 by means of the object recognition function, determine that a portion of the apparatus 20 where the optical marker is placed is outside a capture range of the camera 12, determine a change of the capture range required to cause the portion of the apparatus 20 to be within the field of view of the camera 12, and control at least one of the camera and the autonomous/assisted driving function based on the determined change of the capture range in order to cause the camera to capture an image of the portion of the apparatus.

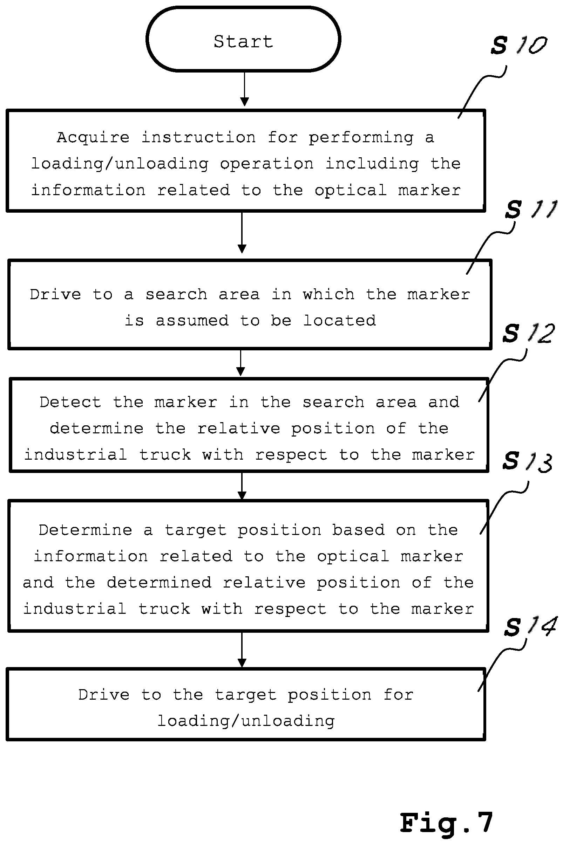

With reference to figs. 6 and 7, an operation of the industrial truck is described.

After starting the procedure, at step S10 the industrial truck acquires an instruction for performing a loading/unloading operation including the information related to the optical marker indicating the target position relative to the optical marker, e.g. from the management system 40 via the transceiver 15. Preferably, the instruction includes an indication of the loading/unloading apparatus 20; the instruction may include an ID of the optical marker; preferably, the instruction includes an indication of a search area 60 in which the marker 30 (and the loading/unloading apparatus 20) is assumed to be located. The instruction may include an ID of the loading/unloading apparatus 20. The search area 60 may be a restricted area in which the loading/unloading apparatus 20 is movable, e.g. a lane along which the wheeled mobile crane 20 can move.

At step S11, the industrial truck 10 drives to a search area 60 in which the marker is assumed to be located; this step can be performed autonomously using the autonomous driving function or manually with the assistance of the assisted driving function.

At step S12, the industrial truck 10 detects the marker in the search area 60 and determine the relative position of the industrial truck 10 with respect to the marker.

At step S13, the industrial truck 10 determines a target position based on the information related to the optical marker and the determined relative position of the industrial truck with respect to the marker.

At step S14, the industrial truck 10 drives to the target position for loading/unloading.

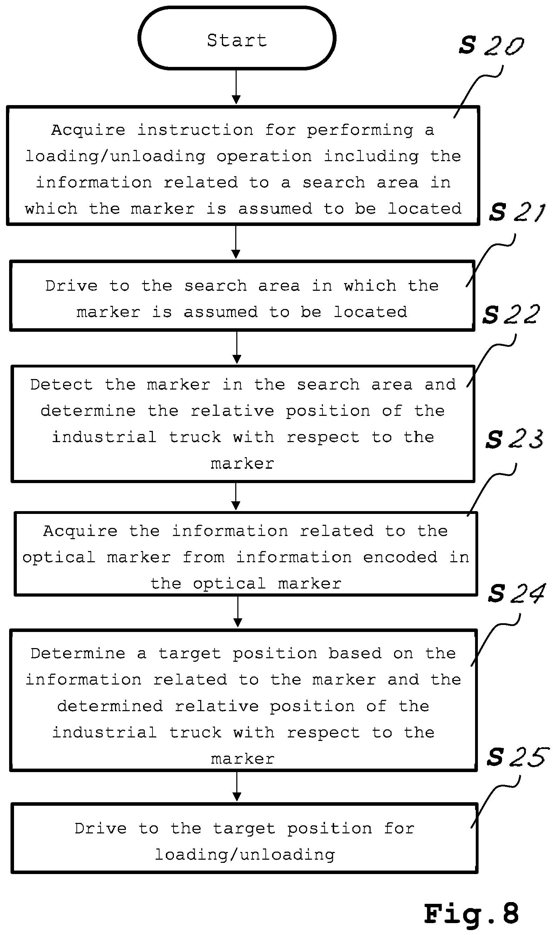

With reference to fig. 8, another operation of the industrial truck is described.

After starting the procedure, at step S20 the industrial truck acquires an instruction for performing a loading/unloading operation including the information related to a search area 60 in which the marker (and the loading/unloading apparatus 20) is assumed to be located. The instruction may include an ID of the loading/unloading apparatus 20 and/or of the optical marker.

At step S21, the industrial truck 10 drives to a search area in which the marker is assumed to be located; this step can be performed autonomously using the autonomous driving function or manually with the assistance of the assisted driving function.

At step S22, the industrial truck 10 detects the marker in the search area 60 and determine the relative position of the industrial truck 10 with respect to the marker.

At step S23, the industrial truck 10 acquires the information related to the optical marker indicating the relative position of a target position to be reached for loading/unloading, from information encoded in the optical marker.

At step S24, the industrial truck 10 determines a target position to be reached for loading/unloading based on the information related to the optical marker and the determined relative position of the industrial truck with respect to the marker.

At step S25, the industrial truck 10 drives to the target position for loading/unloading.

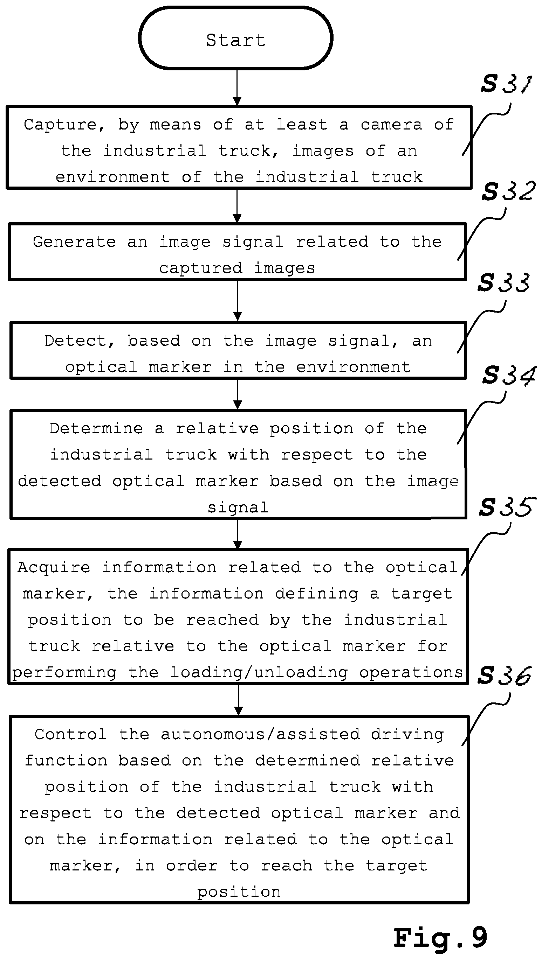

With reference to fig. 9, another operation of the industrial truck is described. This procedure is performed when the industrial truck is close to the optical marker so that the camera can detect the marker.

Step S30: capturing, by means of at least a camera of the industrial truck, images of an environment of the industrial truck,

Step S31: generating an image signal related to the captured images;

Step S32: detecting, based on the image signal, an optical marker in the environment,

Step S33: determining a relative position of the industrial truck with respect to the detected optical marker based on the image signal,

Step S34: acquiring information related to the optical marker, the information defining a target position to be reached by the industrial truck relative to the optical marker for performing the loading/unloading operations,

Step S35: controlling the autonomous/assisted driving function based on the determined relative position of the industrial truck with respect to the detected optical marker and on the information related to the optical marker, in order to reach the target position.

The order of the steps can be varied. E.g. step S35 could be performed before any of steps S31-S34.

The present disclosure refers also to computer program that, when executed by a control unit of an industrial truck, causes the industrial truck to perform the steps S30-S35 above described.

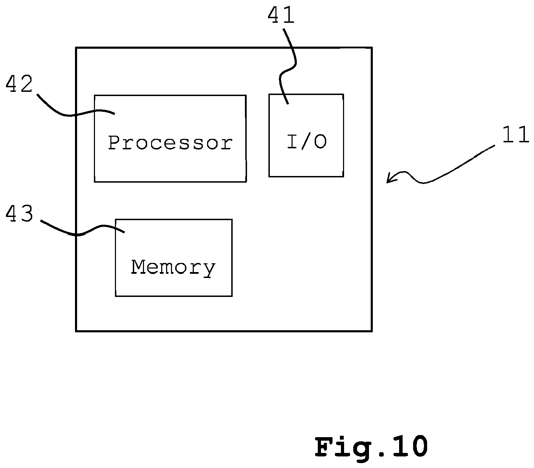

Figure 10 shows a possible implementation of a control unit 11. In an embodiment, the control unit 11 includes at least a processor 42, a memory 43 and a I/O interface 41. The processor 42 is configured to execute instructions comprised in a computer program stored on the memory 43 to execute any of the functions of the control unit, as above described. The memory 43 is configured to store the computer program. When executing the instructions of the computer program, the processor 42 receives information from other elements of the system (e.g. from the receiving unit 15 or from the camera 12) by means the I/O interface 41, and output information to the other elements of the system by means of the I/O interface 41.

### Modifications and variations

Software embodiments of the examples presented herein may be provided as, a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The techniques described herein are not limited to any software configuration. They may find applicability in any computing or processing environment. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

As used herein, a control unit can include one or more processors (e.g. a single/multiple core CPU, microprocessor), graphical processing units (GPU), video processing units (VPU), tensor processing units (TPU), a combination of these or other suitable known types of processing means. Control unit can be replaced by processing means or processing unit.

While various example embodiments of the present invention have been described above, it should be understood that they have been presented by way of example, and not limitation. It will be apparent to persons skilled in the relevant art(s) that various changes in form and detail can be made therein. Thus, the present invention should not be limited by any of the above described example embodiments, but should be defined only in accordance with the following claims and their equivalents.

While this specification contains many specific embodiment details, these should not be construed as limitations on the scope of any inventions or of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

## Claims

1. An industrial truck (10) configured to carry a load and having an autonomous/assisted driving function for approaching an apparatus (20) configured to interact with the industrial truck for performing loading/unloading operations of the truck, the industrial truck comprising:
- a control unit (11) configured for controlling the autonomous/assisted driving function;
- at least a camera (12) configured to capture images of an environment of the industrial truck, the at least one camera being connected to the control unit for providing the control unit with an image signal related to the captured images;
**characterized in that** the control unit is configured to detect, based on the image signal, an optical marker (30, 31) in the environment, wherein the control unit is configured to determine a relative position of the industrial truck with respect to the detected marker based on the image signal,
wherein the control unit is further configured to acquire information related to the optical marker, the information defining a target position (51, 52) to be reached by the industrial truck relative to the optical marker for performing the loading/unloading operations, wherein the control unit is further configured to control the autonomous/assisted driving function based on the determined relative position of the industrial truck with respect to the detected optical marker and on the information related to the optical marker, in order to reach the target position.

2. An industrial truck (10) according to claim 1, wherein the information related to the optical marker is encoded in the optical marker, wherein the control unit (11) is configured to extract the information from the image signal representing the optical marker as provided by the camera.

3. An industrial truck (10) according to claim 1 or 2, wherein the industrial truck includes a receiving section (15) configured to receive from a remote processing device an instruction for performing a loading/unloading operation, wherein the instruction includes the information relating to the optical marker.

4. An industrial truck (10) according to claim 3, wherein the instruction includes an indication of a search space in which the industrial truck is instructed to search for the optical marker corresponding to the information relating to the optical marker included in the instruction.

5. An industrial truck (10) according to any of claims 1-4, wherein the information relating to the optical marker is one of:
- an indication that the target position to be reached by the industrial truck is located in an area below the optical marker, or
- an indication that the target position to be reached by the industrial truck is a position in a preestablished area, and at a distance from the optical marker in a horizontal direction.

6. An industrial truck (10) according to any of claims 1-5, wherein the control unit (11) is configured to perform, based on the image signal provided by the camera (12), an object recognition function to recognize at least a part of the apparatus (20) configured to interact with the industrial truck for loading and unloading the truck, wherein the control unit is configured to preferentially attempt to detect the optical marker in a portion of the image captured by the camera that is determined based on the recognition of the at least a part of apparatus by means of the object recognition function.

7. An industrial truck (10) according to claim 6, wherein the control unit is configured to, upon detecting the at least the part of the apparatus by means of the object recognition function, determine that a portion of the apparatus where the optical marker is placed is outside a capture range of the camera, determine a change of the capture range required to cause the portion of the apparatus to be within the field of view of the camera, and control at least one of the camera and the autonomous/assisted driving function based on the determined change of the capture range in order to cause the camera to capture an image of the portion of the apparatus.

8. An industrial truck (10) according to any of claims 1-7, wherein the optical marker is a QR code, a bar code, an ArUco or an AprilTag.

9. A system including the industrial truck (10) of any of claims 1-8 and an apparatus (20) configured to interact with the industrial truck for loading and unloading the truck, wherein the apparatus includes a fixed part that is fixed during the loading/unloading of the industrial truck and a movable part that is movably connected to the fixed part, the movable part being configured for loading or unloading the industrial truck, wherein the optical marker is located either on the fixed part or on the movable part of the apparatus.

10. A method of performing an autonomous/assisted driving function of an industrial truck (10) for approaching an apparatus (20) configured to interact with the industrial truck for performing loading/unloading operations of the industrial truck, comprising:
- capturing, by means of at least a camera (12) of the industrial truck, images of an environment of the industrial truck,
- generating an image signal related to the captured images;
- detecting, based on the image signal, an optical marker (30, 31) in the environment,
- determining a relative position of the industrial truck with respect to the detected optical marker based on the image signal,
- acquiring information related to the optical marker, the information defining a target position to be reached by the industrial truck relative to the optical marker for performing the loading/unloading operations,
- controlling the autonomous/assisted driving function based on the determined relative position of the industrial truck with respect to the detected optical marker and on the information related to the optical marker, in order to reach the target position.
